# EUROPÄISCHE PATENTSCHRIFT

(11) **EP 0 801 087 B1**
(45) Veröffentlichungstag und Bekanntmachung des Hinweises auf die Patenterteilung: **11.08.1999**
(21) Anmeldenummer: 97104930.9
(22) Anmeldetag: 22.03.1997
(51) Int. Cl.: C08G 18/10, C09D 5/20

(54) **Verwendung einer feuchtigkeitsvernetzenden Einkomponenten-Polyurenthanmasse zur reversiblen Abdeckung eines festen Untergrundes**
Moisture-curing one-component polyurethane composition for reversible covering of a solid base
Utilisation d'une composition de polyuréthane à un composant durcissable par l'humidité pour le revêtement réversible d'un support fixe

(30) Priorität: 11.04.1996 DE 19614277
(43) Veröffentlichungstag der Anmeldung: 15.10.1997
(73) Patentinhaber: Beiersdorf Aktiengesellschaft, 20245 Hamburg (DE)
(72) Erfinder: Zimmermann, Dieter, 21635 Jork (DE); Kehler, Harald, Dr., 21109 Hamburg (DE)

(56) Entgegenhaltungen:
- EP-A- 0 078 936
- EP-A- 0 376 890
- GB-A- 1 390 153
- DATABASE WPI Week 8342 Derwent Publications Ltd., London, GB; AN 83-7911738 XP002033317 & JP 58 152 064 A (FUJIKURA RUBBER WORKS LTD) , 9.September 1983

## Beschreibung

Die Erfindung betrifft die Verwendung einer feuchtigkeitsvernetzenden Einkomponenten-Polyurethanmasse zur reversiblen Abdeckung eines festen Untergrundes.

Für vielfältige Anwendungszwecke ist es wünschenswert, wenn der Untergrund besonders bequem und einfach abgedeckt werden kann. Dieser Fall tritt insbesondere beim Durchführen von Lackiererarbeiten auf. Aber auch beim Schleifen oder vergleichbaren handwerklichen Tätigkeiten ist es wichtig, daß Teile des zu bearbeitenden Gutes durch eine Abdekkung gegen unerwünschte Beschädigungen geschützt sind.

Für diese Einsatzfälle existieren eine Vielzahl von Standardabdeckbändern, die teilweise sogar an ganz spezielle Aufgaben angepaßt sind. Derartige Standardabdeckbänder aus Spezialpapier mit unterschiedlicher Kreppung, Klebkraft, Dicke und Temperaturbeständigkeit sowie die dehnbaren Folienabdeckbänder haben sich für die meisten Anforderungen am Markt bewährt.

Alle Abdeckbänder weisen aber Nachteile auf, die die praktische Verwendung derselben sehr oft erschweren. So ist es zum Beispiel in den Fällen, in denen enge Radien bzw. schwer zugängliche Stellen auf dem Untergrund abzudecken sind, selbst mit entsprechender Erfahrung nur sehr schwer oder überhaupt nicht möglich, eine Problemlösung mit den Bändern zu erreichen. Diese besteht dann gegebenenfalls darin, daß man von einer Klebebandrolle viele einzelne Stücke Klebeband abreißt, die dann auf der entsprechenden Stelle angebracht werden. Besonders enge Radien in dieser Fläche lassen sich auf diese Weise, wenn überhaupt, nur sehr unbefriedigend herstellen. Durch die Stückelung des Klebebandes entstehen oft kleine Spalten, in die die Farbe leicht eindringen kann. Somit ergeben sich Ergebnisse, die eine unerwünschte Nachbearbeitung erfordern. Außerdem muß immer mit beiden Händen gearbeitet werden, um eine Fläche auf dem zu schützenden Untergrund zu bekleben.

Zum Abdichten von Fugen und dergleichen haben sich in der Praxis feuchtigkeitsvernetzende Einkomponenten-Polyurethanmassen, z.B. Elastocoat C 6550 ® der Firma Elastogram, bewährt, die aber stets mit einem Primer, zum Beispiel einem Glasprimer (Elastocoat C 6557 ®) oder einem Metallprimer (Elastocoat C 6556 ®), verarbeitet werden, um die Adhäsion auf dem Untergrund zu erhöhen. Eine nur geringe Klebkraft der feuchtigkeitsvernetzende Einkomponenten-Polyurethanmassen beim Abdichten ist in der Praxis unerwünscht, weil somit diese ihrer Aufgabe der Abdichtung nur ungenügend nachkommen können.

Aufgabe der Erfindung war es damit, hier Abhilfe zu schaffen, also insbesondere dann eine Möglichkeit der Abdeckung des jeweiligen Untergrundes zu schaffen, wenn die zu schützenden Stellen schwer zugänglich sind oder einen engen Radius aufweisen.

Demgemäß betrifft die Erfindung die Verwendung einer feuchtigkeitsvernetzenden Einkomponenten-Polyurethanmasse zum reversiblen Abdecken des festen Untergrundes insbesondere beim Lackieren, wie sie in den Ansprüchen näher gekennzeichnet ist.

Die feuchtigkeitsvernetzende Einkomponenten-Polyurethanmasse wird vorteilhafterweise ohne Primer verarbeitet.
Um ein Lösen der feuchtigkeitsvernetzenden Einkomponenten-Polyurethanmasse vom Untergrund ohne großen Aufwand zu ermöglichen, weist diese eine geringe Adhäsion auf.
Die feuchtigkeitsvernetzende Einkomponenten-Polyurethanmasse ist für die Verwendung zum reversiblen Abdecken von festen Untergründen insbesondere beim Lackieren und hierbei besonders für die Abdeckung enger Radien und/oder schwerzugänglicher Stellen des Untergrundes geeignet.

Bevorzugt wird die feuchtigkeitsvernetzende Einkomponenten-Polyurethanmasse in einer Zweikammer-Aerosol-Dose dargereicht, die sich in der Praxis hervorragend bewährt hat.
Um den Auftrag der feuchtigkeitsvernetzenden Einkomponenten-Polyurethanmasse auf den Untergrund einfach und mit hoher Präzision durchführen zu können, erfolgt diese mit einem Spachtel mit seitlichen Abstandshaltern, der auf das Ventil der Zweikammer-Aerosol-Dose aufgesteckt werden kann.
Der Spachtel besteht dabei aus zwei im wesentlichen trapezförmigen Platten annähernd gleichen Formats, die jeweils an ihren seitlichen Kanten über Seitenwände sowie an den kürzeren, oberen Kanten über einen Boden miteinander verbunden sind. In dem Boden, der die kürzeren, oberen Kanten verknüpft, befindet sich eine Öffnung mitsamt einer Vorrichtung, die auf das Ventil der Zweikammer-Aerosol-Dose aufgesteckt wird und die den Durchtritt der feuchtigkeitsvernetzenden Einkomponenten-Polyurethanmasse in den hohlen Spachtel ermöglicht.
Die längeren, unteren Kanten sind nicht verbunden, so daß durch die somit vorhandene Öffnung die feuchtigkeitsvernetzende Einkomponenten-Polyurethanmasse auf den jeweiligen Untergrund aufgetragen und gleichzeitig glattgestrichen werden kann.
Die seitlichen Abstandhalter am Spachtel, die an den Seitenwänden anschließen und die die Seitenwände verlängern, dienen dazu, den aus dem Spachtel austretenden Massestrom seitlich definiert zu begrenzen.

Für spezielle Anwendungsfälle kann die feuchtigkeitsvernetzende Einkomponenten-Polyurethanmasse vorteilhafterweise gefärbt sein, wenn diese beispielsweise eine dem Untergrund entsprechende Farbe aufweisen soll.

Die Verwendung einer feuchtigkeitsvernetzenden Einkomponenten-Polyurethanmasse um den Untergrund vorzugsweise bei Lackiererarbeiten gegen unerwünschte Beschädigungen reversibel zu schützen, bietet auch für den Fachmann nicht vorherzusehende Vorteile.
Insbesondere wenn die feuchtigkeitsvernetzende Einkomponenten-Polyurethanmasse in Kombination mit einer Zweikammer-Aerosol-Dose, die im Handel erhältlich ist und die die Möglichkeit des umweltgerechten Nachfüllens bietet, dargereicht wird, und wenn der Auftrag in Verbindung mit einem Spachtel mit seitlichen Abstandshaltern, der auf dem Ventil der Aerosol-Dose angebracht ist, erfolgt, ist das gewünschte Anforderungsprofil mit dem Produkt zu erreichen.
Auch Laien haben keine Probleme, engere Radien, schwierige Ecken oder nur schwer zugängliche Stellen mit der Masse abzudecken. Bedingt durch die spezielle Darreichungsform kann dabei die Verarbeitung sogar einhändig erfolgen.

Darüber hinaus weist die verwendete feuchtigkeitsvernetzende Einkomponenten-Polyurethanmasse positive Eigenschaften auf. Die Masse ist gegenüber Farben auf Wasser- und auf Lösungsmittelbasis unempfindlich, weiterhin ist sie lösungsmittelfrei.

Die relativ geringe Adhäsion der feuchtigkeitsvernetzenden Einkomponenten-Polyurethanmasse auf festen Untergründen erlaubt, diese nach Gebrauch ohne Schwierigkeiten zu entfernen. Insbesondere wenn die Masse nach 16 bis 24 Stunden durchgehärtet ist, kann diese mit der Hand vom Untergrund abgezogen werden.

### Beispiel

Die feuchtigkeitsvernetzende Einkomponenten-Polyurethanmasse Elastocoat C 6550 ® wird zur Abdeckung von einem Bullauge eingesetzt, dessen Rahmen lackiert werden soll.
Die Masse befindet sich im Advanced-Zwei-Kammersystem der Firma Ecopack EV in Kombination mit einem Spezial-Druckventil der Firma Lindal, Bad Oldesloe, und einem Spachtel mit seitlichen Abstandhaltern.
Die Dose wird nun einhändig entlang des Rahmens geführt, parallel das Ventil betätigt, so daß gut begrenzte Abdeck- und Schutzstreifenbänder auf dem Bullauge auftragen werden.

Nach ca. zwei bis drei Minuten hat sich eine dünne Haut auf der Oberfläche gebildet, und man kann mit den Malerarbeiten beginnen.

Nach ca. 16 - 20 Stunden ist das Material durchgehärtet und kann problemlos rückstandsfrei abgezogen und entsorgt werden.

Nach dem Gebrauch verschließt man das Ventil z.B. mit einem entsprechenden Stopfen, so daß ein unerwünschtes Durchhärten der Masse in der Zweikammer-Aerosol-Dose verhindert wird.

Vor der neuen Anwendung entfernt man den Stopfen (mit etwas angehärteter, fester Masse) und entnimmt gegebenenfalls die im hohlen Spachtel ausgehärtete Masse, und die Zweikammer-Aerosol-Dose ist wieder gebrauchsfertig.

## Patentansprüche

1. Verwendung einer feuchtigkeitsvernetzenden Einkomponenten-Polyurethanmasse zum reversiblen Abdecken von festen Untergründen insbesondere beim Lackieren.

2. Verwendung nach Anspruch 1, wobei die feuchtigkeitsvernetzende Einkomponenten-Polyurethanmasse keinen Primer aufweist.

3. Verwendung nach den Ansprüchen 1 oder 2, wobei die feuchtigkeitsvernetzende Einkomponenten-Polyurethanmasse eine geringe Adhäsion aufweist.

4. Verwendung nach den Ansprüchen 1 bis 3 für die reversible Abdeckung enger Radien und/oder schwerzugänglicher Stellen des Untergrundes.

5. Verwendung nach den Ansprüchen 1 bis 4, wobei die feuchtigkeitsvernetzende Einkomponenten-Polyurethanmasse in einer Zweikammer-Aerosol-Dose dargereicht ist.

6. Verwendung nach den Ansprüchen 1 bis 5, wobei der Auftag der feuchtigkeitsvernetzenden Einkomponenten-Polyurethanmasse auf den Untergrund mit einem Spachtel mit seitlichen Abstandshaltern erfolgt, der aus zwei im wesentlichen trapezförmigen Platten annähernd gleichen Formats besteht, die jeweils an ihren seitlichen Kanten über Seitenwände sowie an der kürzeren, oberen Kanten über einen Boden miteinander verbunden sind, wobei sich in dem Boden, der die kürzeren, oberen Kanten verknüpft, eine Öffnung mitsamt einer Vorrichtung befindet, die auf das Ventil der Zweikammer-Aerosol-Dose aufgesteckt wird und die den Durchtritt der feuchtigkeitsvernetzenden Einkomponenten-Polyurethanmasse in den hohlen Spachtel ermöglicht.

7. Verwendung nach den Ansprüchen 1 bis 6, wobei die feuchtigkeitsvernetzende Einkomponenten-Polyurethanmasse gefärbt ist.

## Claims

1. Use of a moisture-curing one-component polyurethane composition for reversibly covering solid substrates, particularly when surface coatings are being applied.

2. Use according to Claim 1, wherein the moisture-curing one-component polyurethane composition has no primer.

3. Use according to Claim 1 or 2, wherein the moisture-curing one-component polyurethane composition has low adhesion.

4. Use according to Claims 1 to 3 for reversibly covering tight radii and/or difficult-to-reach places on the substrate.

5. Use according to Claims 1 to 4, wherein the moisture-curing one-component polyurethane composition is supplied in a two-chamber aerosol can.

6. Use according to Claims 1 to 5, wherein the application of the moisture-curing one-component polyurethane composition to the substrate is carried out using a spatula having lateral spacers and comprising two essentially trapezium-shaped plates of approximately the same format which are connected to one another at each of their lateral edges by means of side walls and at the shorter, upper edges by means of a base, where the base which links the shorter, upper edges is provided with an opening together with a device which is fitted onto the valve of the two-chamber aerosol can and which makes it possible for the moisture-curing one-component polyurethane composition to pass through into the hollow spatula.

7. Use according to Claims 1 to 6, wherein the moisture-curing one-component polyurethane composition has been coloured.

## Revendications

1. Utilisation d'une composition de polyuréthanne à un composant durcissable à l'humidité pour le revêtement réversible de supports fixes, en particulier pour le vernissage.

2. Utilisation suivant la revendication 1, dans laquelle la composition de polyuréthanne à un composant durcissable à l'humidité ne présente pas de couche de fond.

3. Utilisation suivant les revendications 1 ou 2, dans laquelle la composition de polyuréthanne à un composant durcissable à l'humidité présente une adhérence faible.

4. Utilisation suivant les revendications 1 à 3, pour le revêtement réversible de rayons étroits et/ou de zones difficilement accessibles du support.

5. Utilisation suivant les revendications 1 à 4, dans laquelle la composition de polyuréthanne à un composant durcissable à l'humidité est fournie dans une bombe aérosol à deux compartiments.

6. Utilisation suivant les revendications 1 à 5, dans laquelle l'application de la composition de polyuréthanne à un composant durcissable à l'humidité sur le support est effectuée au moyen d'une spatule munie d'écarteurs latéraux, qui est constituée de deux plaques essentiellement trapézoïdales de format approximativement identique, qui sont chacune reliées entre elles à leurs bords latéraux par le biais de parois latérales, ainsi qu'aux bords supérieurs, plus courts, par le biais d'un fond, une ouverture, ainsi qu'un dispositif se trouvant ensemble dans le fond qui relie les bords supérieurs plus courts, lequel dispositif est fixé sur le clapet de la bombe aérosol à deux compartiments et qui permet le passage de la composition de polyuréthanne à un composant durcissable à l'humidité dans la spatule creuse.

7. Utilisation suivant les revendications 1 à 6, dans laquelle la composition de polyuréthanne à un composant durcissable à l'humidité est teintée.
